Europäisches Patentamt

European Patent Office

Office européen des brevets

(11) Veröffentlichungsnummer: **0 075 663**
**B1**

(12) **EUROPÄISCHE PATENTSCHRIFT**

(19)

(45) Veröffentlichungstag der Patentschrift:
**24.09.86**

(21) Anmeldenummer: **82106239.5**

(22) Anmeldetag: **13.07.82**

(51) Int. Cl.⁴: **C 01 B 21/04, B 01 D 53/04**

(54) Verfahren und Vorrichtung zur Herstellung von hochreinem Stickstoff.

(30) Priorität: **22.09.81 DE 3137569**

(43) Veröffentlichungstag der Anmeldung:
**06.04.83 Patentblatt 83/14**

(45) Bekanntmachung des Hinweises auf die Patenterteilung:
**24.09.86 Patentblatt 86/39**

(84) Benannte Vertragsstaaten:
**BE DE FR GB IT NL SE**

(56) Entgegenhaltungen:
**EP-A-0 038 410**
**DE-A-1 417 743**
**DE-A-2 260 872**
**DE-B-1 252 187**
**DE-C-1 544 152**
**DE-C-2 441 447**
**US-A-3 535 074**

(73) Patentinhaber: **Leybold- Heraeus GmbH, Bonner Strasse 504 Postfach 51 07 60, D-5000 Köln 51 (DE)**

(72) Erfinder: **Amlinger, Heinrich, Johann- Schmidt- Strasse 12, D-6361 Niddatal 2 (DE)**
Erfinder: **Schilling, Helmut, In der Gartel 1, D-6458 Rodenbach 1 (DE)**

(74) Vertreter: **Leineweber, Jürgen, Dipl.- Phys., Am Heidstamm 78 a, D-5000 Köln 40 (DE)**

EP 0 075 663 B1

**Beschreibung**

Die Erfindung bezieht sich auf ein Verfahren zur Herstellung von reinem Stickstoff aus Luft, bei dem in einem ersten Schritt ein mit Stickstoff angereichertes, Sauerstoff enthaltendes Rohgas erzeugt und in einem weiteren Schritt der noch vorhandene Sauerstoff durch Oxydation von Kupfer entfernt wird. Außerdem bezieht sich die Erfindung auf eine Vorrichtung zur Durchführung dieses Verfahrens.

Aus den DE-C 15 44 152 und 24 41 447 sowie aus dem DE-U-80 10 651 sind Verfahren zur adsorptiven Abtrennung von Stickstoff aus Luft bekannt. Der Reinheitsgrad, mit dem das in der Regel als Inertgas verwendete Stickstoffgas gewonnen werden kann, liegt bei 99,5 %, was mit technisch rein bezeichnet wird. In vielen Fällen (z. B. auf Tankschiffen zur Auffüllung entleerter Tanks mit Inertgasen) sind jedoch hochreine Inertgase erwünscht, d. h., die Restkonzentration an Sauerstoff darf nicht größer sein als 1 ppm. Außerdem darf der von der Restkonzentration an Wasserdampf abhängige Taupunkt des Inertgases -60° C nicht überschreiten.

Ein Verfahren der eingangs genannten Art ist aus der US-A- 35 35 074 bekannt. Dabei wird das zu reinigende Inertgas als Rohgas erzeugt (die Art und Weise ist nicht angegeben) und danach sowohl durch einen Rekombinator mit Katalysator als auch durch ein Kupferbett geleitet. Im Anschluß daran ist weiterhin in einer Rektifikationsstufe die Entfernung von überschüssigem Wasserstoff erforderlich.

Weiterhin ist es aus der DE-OS 14 17 743 bekannt, zur Gewinnung von Schutzgas aus Luft das zu trennende Gasgemisch im Kreislauf über einen Katalysator zu leiten. Schließlich offenbart die DE-AS 12 52 187 ein Verfahren zur Reinigung von Helium.

Der vorliegenden Erfindung liegt die Aufgabe zugrunde, ein Verfahren und eine Vorrichtung zur Herstellung von hochreinem Stickstoff aus Luft anzugeben, welche mit relativ geringen Mitteln realisiert und mit relativ geringen Energiekosten betrieben werden können.

Erfindungsgemäß wird diese Aufgabe dadurch gelöst, daß zunächst mit Hilfe einer an sich bekannten Druckwechselanlage, die zwei wechselweise in Adsorptionsphase und Regenerierungsphase betriebene Adsorptionsbehälter umfaßt, technisch reiner Stickstoff kontinuierlich produziert wird und daß in einem zweiten Schritt der noch vorhandene Sauerstoff in zwei Cu-Bett-Adsorbern, die ebenfalls wechselweise in Adsorptionsphase und Regenerierungsphase betrieben werden, kontinuierlich durch Oxidation von Kupfer bis auf eine maximale Restkonzentration von 1 ppm entfernt wird. Bereits diese beiden Schritte ermöglichen es, Stickstoff mit dem angegebenen Reinheitsgrad und mit einem Taupunkt von ca. -60° C zu erzeugen.

Die besonderen Vorteile des erfindungsgemäßen Verfahrens liegen insbesondere in den niedrigen Investitions- und Energiekosten, die zum Betrieb einer erfindungsgemäßen Vorrichtung erforderlich sind.

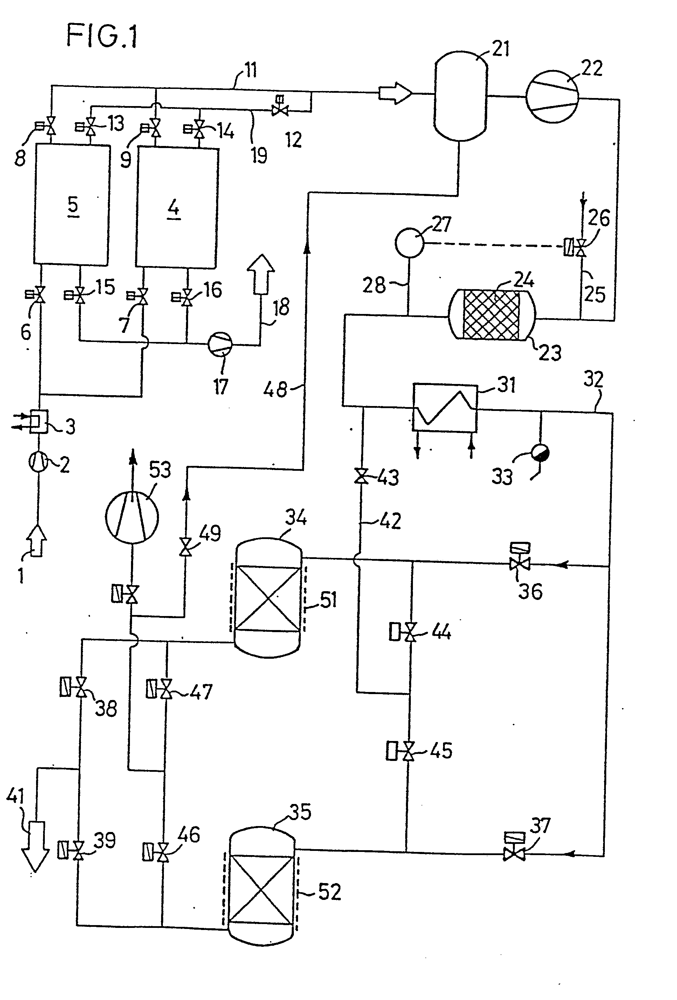

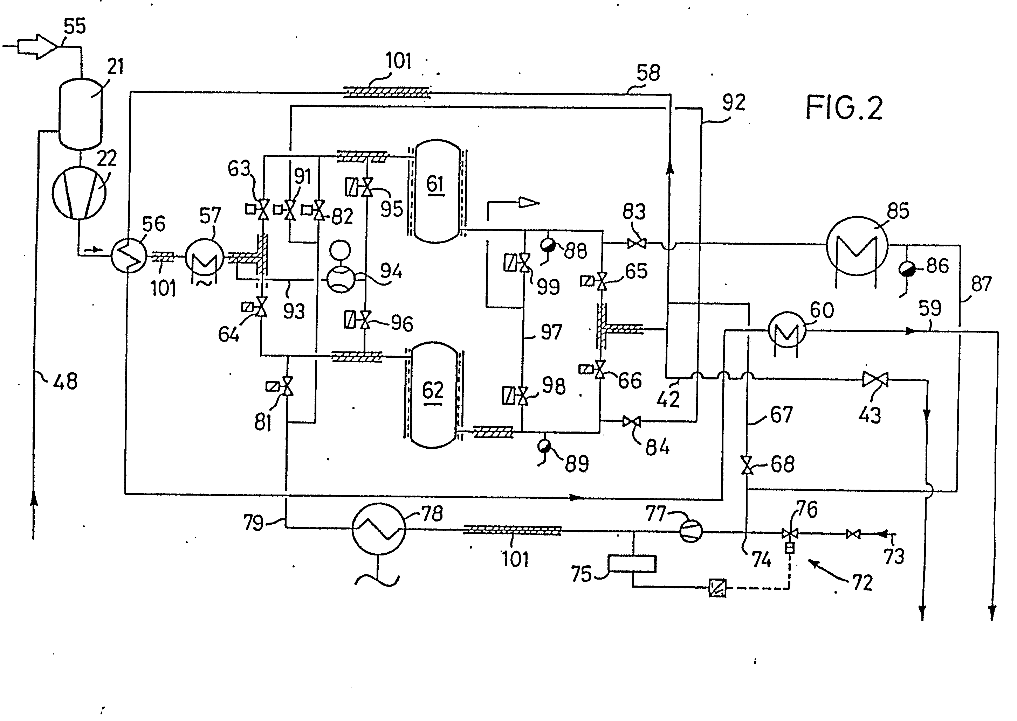

Weitere Vorteile und Einzelheiten der Erfindung sollen anhand von in den Fig. 1 und 2 dargestellten Ausführungsbeispielen erläutert werden. Es zeigen:

Fig. 1: ein Ausführungsbeispiel für ein Fließschema zur Durchführung des erfindungsgemäßen Verfahrens und

Fig. 2: ein Fließschema für eine gegenüber dem Ausführungsbeispiel nach Figur 1 weitere Möglichkeit der Entferung von Restsauerstoff.

Bei dem in Fig. 1 dargestellten Fließschema erfolgt bei 1 das Ansaugen von Luft. Diese wird z. B. mit Hilfe eines Rootsgebläses 2 auf ca. 1,8 bar komprimiert. Die durch die Kompression aufgenommene Wärme wird im Kühler 3 wieder entfernt. Danach erfolgt wechselweise die gewünschte adsorptive Trennung von Stickstoff und Sauerstoff in den Adsorptionsbehältern 4 und 5, was durch entsprechende Steuerung der Ventile 6 bis 9 erreicht wird. Die Adsorptionsbehälter sind vorzugsweise mit Kohlenstoffmolekularsieben gefüllt. Zur Aufrechterhaltung einer kontinuierlichen Betriebsweise wird abwechselnd jeweils ein Behälter auf Adsorption geschaltet, wodurch technisch reiner Stickstoff produziert und durch die Austrittsleitung 11 abgeleitet wird. In dieser Zeit wird der andere Behälter durch entsprechende Steuerung der Ventile 12 bis 16 regeneriert. Das geschieht zweckmäßig unter Vakuum, und zwar mit Hilfe der Vakuumpumpe 17, die zweckmäßig ebenfalls eine Rootspumpe ist. Über die Leitung 18 verläßt das mit Sauerstoff angereicherte Gas die beschriebene Anlage. Vor dem Umschalten von Regeneration (unter Vakuum) auf Adsorption (unter leichtem Überdruck) erfolgt über die Leitung 19 ein Druckausgleich des jeweils regenerierten Behälters mit der Austrittsleitung 11.

Der technisch reine Stickstoff gelangt über den Pufferbehälter 21 und den Kompressor 22 zu einem Rekombinator 23, in dem ein Edelmetall-Katalysator 24 untergebracht ist. Als Katalysatormaterial kommen Palladium, Platin, Ruthenium o. dgl. infrage. Vor dem Rekombinator 23 wird über die Leitung 25 und das Ventil 26 Wasserstoff leicht überstöchiometrisch in das Produktgas eingespeist. Dadurch erfolgt im Rekombinator in Anwesenheit des Edelmetall-Katalysators eine Verbrennung des noch vorhandenen Sauerstoffs zu Wasser, und zwar nach der chemischen Gleichung

$$H_2 + 1/2\,O_2 = H_2O$$

Die Regelung des überstöchiometrischen Wasserstoffanteils erfolgt mit Hilfe eines $H_2$-Analysators 27, dem in Strömungsrichtung des Produktgases hinter dem Rekombinator 23 über die Leitung 28 das zu untersuchende Gas zugeführt wird. Mit dem $H_2$-Analysator 27 erfolgt die Steuerung des Ventils 26. Durch die Kompression des Produktgases im Kompressor 22 kann die Verbrennung bei erhöhtem Druck (ca. 8 bar) und erhöhter Temperatur durchgeführt werden. Anschließend wird das Produktgas im Kühler 31 zurückgekühlt.

Vom Kühler 31 wird das produktgas über die Leitung 32, an die der Kondensatabscheider 33 angeschlossen ist, einer Vorrichtung zur Entfernung der Restfeuchte zugeführt. Zur Erzielung eines kontinuierlichen Produktgasstromes sind zwei Adsorber 34 und 35 vorgesehen, die durch entsprechende Steuerung der Ventile 36 bis 39 wechselweise durchströmt werden. Der hochreine Stickstoff verläßt dann schließlich die Anlage bei 41.

Die Adsorber 34 und 35 sind mit Zeolith (3A oder 4A) oder anderen Trockenmitteln gefüllt und adsorbieren die im Produktgas vorhandene Restfeuchte. Bei entsprechender Auslegung kann eine Taupunkterniedrigung des Produktgases auf weniger als -75 °C erreicht werden.

Die abwechselnde Regeneration der Adsorber 34 und 35 erfolgt mit heißem Stickstoffgas, das über die Leitung 42 mit dem Ventil 43 vor dem Kühler 31 der Produktgasleitung entnommen wird. Durch entsprechende Steuerung der Ventile 44 bis 47 wird das heiße Produktgas wechselweise durch die Adsorber 34 und 35 hindurchgeleitet und über die Leitung 48 mit dem Ventil 49 dem Pufferbehälter 21 zugeführt. Diese Art der Regenerierung der Adsorber 34 und 35 hat den Vorteil, daß zur Verfügungstellung von heißen Regeneriergasen ein zusätzlicher Energieaufwand nicht erforderlich ist. Dadurch, daß das Regeneriergas dem Pufferbehälter 21 zugeführt wird, geht weder die darin enthaltene Energie noch dieses relativ reine Inertgas selbst verloren. Schließlich sind die Adsorberbehälter 34 und 35 zur Reduzierung von Energieverlusten mit jeweils einer Wärmeisolierung 51 und 52 ausgerüstet.

Vor dem Umschalten des Absorbers 34 oder 35 von Regeneration auf Adsorption wird der jeweilige Adsorber mit Hilfe der Vakuumpumpe 53 evakuiert, damit eine besonders hohe Desorptionswirkung erreicht wird. Nach erfolgtem Druckausgleich mit Produktgas steht dann der Adsorber wieder zur Verfügung.

Fig. 2 zeigt eine Alternative für die Entfernung von noch vorhandenem Sauerstoff aus dem die Druckwechselanlage verlassenden technisch reinem Inertgas, das bei 55 in den Pufferbehälter 21 eintritt. In den Pufferbehälter 21 mündet auch die Leitung 48, über die das Regeneriergas aus der nicht dargestellten Molekularsiebtrocknung zugeführt wird.

Das Produktgas gelangt hinter dem Kompressor 22 in einen Wärmetauscher 56 und anschließend in einen Elektro-Gas-Erhitzer 57. Darin wird es auf ca. 150 °C erwärmt. Das Heizmedium des Wärmetauschers 56 ist das aus der dargestellten Anlage durch die Leitung 58 austretende hochreine Inertgas, das über die Leitung 59 mit dem Kühler 60 der Molekularsiebtrocknung zugeführt wird.

Das erwärmte Produktgas wird wechselweise durch die Cu-Bett-Adsorber 61 und 62 hindurchgeführt, was durch entsprechende Steuerung der Ventile 63 bis 66 bewerkstelligt wird. Die Betten 61 und 62 sind mit Kupfergranulat (z. B. R3-11 der BASF) gefüllt. Der im Produktgas noch vorhandene Sauerstoff lagert sich am Kupfer an, so daß sich CuO bildet. Bei dieser Art der Sauerstoffbeseitigung wird kein Reaktionswasser und kein überstöchiometrischer Wasserstoff im gereinigten Produktgas zurückgelassen, so daß das durch die Leitungen 58 und 59 austretende Produktgas bereits einen Taupunkt von ca. -60°C hat, also bereits als hochrein bezeichnet werden kann. Eine Molekularsieb-Nachtrocknung ist nur dann erforderlich, wenn der Taupunkt weiter gesenkt werden soll. An die Leitung 58 ist die Leitung 42 mit dem Ventil 43 angeschlossen, über die Spülgas zur Regenerierung der Trocknung dienenden Adsorber (Fig. 1) entnommen wird.

Auch die abwechselnde Regenerierung der Cu-Betten 61 und 62 erfolgt mit Produktgas, das der Leitung 58 über die Leitung 67 mit dem Ventil 68 entnommen wird. Es gelangt danach zu einer generell mit 72 bezeichneten Einrichtung zur Dotierung der Regeneriergase mit Wasserstoff (vorzugsweise 1 bis 2 %). Der Wasserstoff wird bei 73 eingelassen und bei 74 mit dem Regeneriergas vermischt. Mit Hilfe des Wasserstoffanalysators 75 und des Regelventils 76 wird die gewünschte Wasserstoffkonzentration eingestellt.

Das Gebläse 77 fördert das mit Wasserstoff dotierte Regeneriergas über den Erhitzer 78 in der Leitung 79 wahlweise zu den Cu-Betten 61 und 62, was durch entsprechende Steuerung der Ventile 81 und 82 erreicht wird. Das Regeneriergas wird so lange durch den jeweiligen Adsorber im Kreislauf geführt, bis die Wasserstoffkonzentration am Ausgang des Adsorbers auf den Eintrittswert steigt. Zur Steuerung des Regenerierungskreislaufs dienen u.a. die Ventile 83 und 84, über die das Regeneriergas im Kühler 85 mit dem Kondensatableiter 86 zugeführt wird. Vom Kühler 85 aus gelangt das Regeneriergas über die Leitung 87 in die Leitung 67.

Die Kühlung durch den Kühler ist erforderlich, da die bei der Regeneration eintretende chemische Reaktion

$$CuO + H_2 = Cu + H_2O$$ exotherm ist und damit eine Temperaturerhöhung im Regeneriergas erzeugt. Das Kreislaufgas wird deshalb nach Durchströmen des Adsorbers auf ca. 120 °C gekühlt. Im Adsorber erfolgt dann durch die exotherme Reaktion eine Temperaturerhöhung auf ca. 220°C. Der Elektroerhitzer 78 ist nur für die Inbetriebnahme der Anlage erforderlich.

Nach der Beendigung der Regeneration schaltet die Wasserstoffdosiereinrichtung 72 ab. Um eventuell auftretende Reaktionswasser aus den Rohrleitungen zu entfernen, wird noch einige Stunden heißes Gas im Kreislauf gefördert. An die Austrittsleitungen der Adsorber 61 und 62 sind entsprechende Kondensatableiter 88 und 89 angeschlossen.

Daran anschließend wird der Regeneriergaskreislauf in ein Bypass, und zwar über das Ventil 91 und die Leitung 92, geführt, während der regenerierte Adsorber gespült wird. Das geschieht mit Produktgas über die Leitung 93, dem Strömungsmesser 94 und das Ventil 95 oder 96, je nachdem, welcher Adsorber sich in der Regenerierungsphase befindet. Die Spülgase verlassen die Anlage über die Leitung 97 mit den Ventilen 98 und 99. Nach der Beendigung der Regenerierung werden vor dem Umschalten der Adsorber beide Adsorberbehälter auf das gleiche Druckniveau gebracht.

Die gesamte in Fig. 2 dargestellte Anlage ist derart aufgebaut, daß möglichst wenig Energie durch Abstrahlung verlorengeht. An einigen Stellen (101) ist angedeutet, daß z. B. die Leitungen mit Wärmeisolierungen ausgerüstet sind.

Es ist zweckmäßig, wenn vorzugsweise alle der Steuerung der Gase dienenden Ventile als Klappenventile ausgebildet sind. Diese zeichnen sich durch hohe Lebensdauer und gute Funktionssicherheit aus. Die der Förderung der Gase dienenden Gebläse sind zweckmäßig als Roots-Gebläse (mit oder ohne Voreinlaßkühlung) ausgebildet, da sie nur einen solchen Druck aufbauen, der ihnen als Widerstand entgegengebracht wird, was bei den beschriebenen Anlagen besonders vorteilhaft ist. Auch die erwähnten Vakuumpumpen sind zweckmäßig Roots-Gebläse.

**Patentansprüche**

1. Verfahren zur Herstellung von reinem Stickstoff aus Luft, bei dem in einem ersten Schritt ein mit Stickstoff angereichertes, Sauerstoff enthaltendes Rohgas erzeugt und in einem weiteren Schritt der noch vorhandene Sauerstoff durch Oxydation von Kupfer entfernt wird,

dadurch gekennzeichnet, daß zunächst mit Hilfe einer an sich bekannten Druckwechselanlage, die zwei wechselweise in Adsorptionsphase und Regenerierungsphase betriebene Adsorptionsbehälter (4, 5) umfaßt, technisch reiner Stickstoff kontinuierlich produziert wird und daß in einem zweiten Schritt der noch vorhandene Sauerstoff in zwei Cu-Bett-Adsorbern (61, 62), die ebenfalls wechselweise in Adsorptionsphase und Regenerierungsphase betrieben werden, kontinuierlich durch Oxydation von Kupfer bis auf eine maximale Restkonzentration von 1 ppm entfernt wird.

2. Verfahren nach Anspruch 1, dadurch gekennzeichnet, daß sich eine Trocknung zur weiteren Reduzierung des Taupunktes anschließt.

3. Verfahren nach Anspruch 2, dadurch gekennzeichnet, daß die Nachtrocknung mit Hilfe von Zeolithen oder anderen adsorptiven Trockenmitteln durchgeführt wird.

4. Verfahren nach Anspruch 3, dadurch gekennzeichnet, daß die Regenerierung der der Trocknung dienenden Zeolithe mit heißem Produktgas erfolgt, welches der Produktgasleitung entnommen wird, die in Strömungsrichtung hinter den Einrichtungen zur Entfernung des Restsauerstoffes liegt.

5. Verfahren nach einem der vorhergehenden Ansprüche 1 bis 4, dadurch gekennzeichnet, daß die Regenerierung der Cu-Bett-Adsorber (61, 62) mit mit Wasserstoff dotiertem Produktgas durchgeführt wird.

6. Verfahren nach Anspruch 5, dadurch gekennzeichnet, daß im Anschluß an die eigentliche Regenerierung mit Wasserstoff enthaltendem Regeneriergas zur Entfernung von Reaktionswasser aus den Rohrleitungen heißes Produktgas für einige Stunden im Kreislauf gefördert wird.

7. Verfahren nach Anspruch 6, dadurch gekennzeichnet, daß die Adsorber (61, 62) jeweils anschließend mit einer einstellbaren Spülgasmenge (ebenfalls Produktgas) durchströmt werden.

8. Vorrichtung zur Durchführung eines Verfahrens nach einem der vorhergehenden Ansprüche, dadurch gekennzeichnet, daß zur Herstellung von hochreinem Stickstoff eine an sich bekannte Druckwechselanlage (1 bis 19) vorgesehen ist, an die sich eine Einrichtung zur Entfernung des Restsauerstoffs durch Oxydation von Kupfer anschließt, die zwei wechselweise betriebene Cu-Bett-Adsorber (61, 62) umfaßt.

9. Vorrichtung nach Anspruch 8, dadurch gekennzeichnet, daß zur Nachtrocknung des Inertgases zwei wechselweise betriebene Zeolith-Adsorber (34, 35) vorgesehen sind.

10. Vorrichtung nach einem der Ansprüche 8 oder 9, dadurch gekennzeichnet, daß vorzugsweise alle der Steuerung des Inertgases und der Regeneriergase dienenden Ventile als Klappenventile ausgebildet sind.

11. Vorrichtung nach einem der Ansprüche 8, 9 oder 10, dadurch gekennzeichnet, daß zumindest ein Teil der der Förderung des Produktgases dienenden Gebläse als Rootsgebläse ausgebildet sind.

12. Vorrichtung nach einem der Ansprüche 8 bis 11, dadurch gekennzeichnet, daß die Vakuumpumpe (17) der Druckwechselanlage (1 bis 19) als Rootsgebläse ausgebildet ist.

**Claims**

1. A process for producing pure nitrogen from air, wherein in a first stage there is produced a crude gas enriched with nitrogen and containing oxygen and in a further stage the oxygen still present is removed by oxidizing copper, characterized in that firstly technically pure nitrogen is produced continuously with the aid of a pressure-swing apparatus, known in itself, which comprises two adsorption vessels (4, 5) operated alternately in adsorption phase and regeneration phase, and that in a second stage the oxygen still present is removed continuously to a maximum residual concentration of 1 ppm by oxidizing copper in two Cu-bed adsorbers (61, 62) which are also operated alternately in adsorption phase and regeneration phase.

2. A process according to claim 1, characterized in that there follows a drying process to lower the dew point further.

3. A process according to claim 2, characterized in that the second drying process is effected with the aid of zeolites or other adsorptive drying agents.

4. A process according to claim 3, characterized in that the regeneration of the zeolites serving as drying agents is effected with hot product gas, which is removed from the product gas pipe which is located downstream of the apparatus for removing the residual oxygen.

5. A process according to any one of claims 1 to 4, characterized in that the regeneration of the Cu-bed adsorbers (61,62) is effected with product gas into which hydrogen has been introduced.

6. A process according to claim 5, characterized in that subsequent to the actual regeneration with regenerating gas containing hydrogen, hot product gas is conveyed around the circuit for several hours to remove reaction water from the pipe lines.

7. A process according to claim 6, characterized in that an adjustable quantity of cleansing gas (also product gas) flows subsequently through each of the adsorbers (61, 62).

8. An apparatus for carrying out the process according to any one of the preceding claims, characterized in that to produce high-purity nitrogen there is provided a pressure-swing apparatus (1 to 19), known in itself, to which is connected a device for removing the residual oxygen by oxidizing copper, this device comprising two alternately operated Cu-bed adsorbers (61, 62).

9. An apparatus according to claim 8, characterized in that two alternately operated zeolite adsorbers (34, 35) are provided for the secondary drying of the inert gas.

10. An apparatus according to one of claims 8 or 9, characterized in that preferably all the valves serving to control the inert gas and the regenerating gases are constructed as flap valves.

11. An apparatus according to any one of claims 8, 9 or 10, characterized in that at least some of the blowers serving to convey the product gas are constructed as Root's blowers.

12. An apparatus according to any one of claims 8 to 11, characterized in that the vacuum pump (17) of the pressure-swing apparatus (1 to 19) is constructed as a Root's blower.

**Revendications**

1. Procédé pour fabriquer de l'azote pur à partir d'air selon lequel on produit un gaz brut enrichi d'azote et contenant de l'oxygène dans une première étape et on élimine l'oxygène encore présent par oxydation de cuivre dans une étape suivante, caractérisé en ce que, à l'aide d'une installation à alternance de pression en elle-même connue, comprenant deux récipients d'adsorption (4, 5) fonctionnant alternativement en phase d'adsorption et en phase de régénération, on produit de façon continue de l'azote techniquement pur et que, dans une deuxième étape, on élimine en continu l'oxygène encore présent par oxydation de cuivre en deux adsorbeurs à lit de cuivre (61, 62), qui sont également utilisés alternativement en phase d'adsorption et en phase de régénération, jusqu'à une concentration résiduelle en oxygène de tout au plus 1 ppm.

2. Procédé selon la revendication 1, caractérisé en ce qu'il est suivi par un séchage pour abaisser davantage le point de rosée.

3. Procédé selon la revendication 2, caractérisé an ce que l'on effectue le post-séchage à l'aide de zéolites ou d'autres agents de déshydratation agissant par adsorption.

4. Procédé selon la revendication 3, caractérisé en ce que l'on effectue la régénération des zéolites servant au séchage par du gaz produit chaud que l'on prélève de la conduite de gaz produit située en aval des dispositif pour éliminer l'oxygène résidual.

5. Procédé selon une des revendications 1 à 4, caractérisé en ce que l'on effectue la régénération des adsorbeurs à lit de cuivre (61, 62) avec du gaz produit additionné d'hydrogène.

6. Procédé selon la revendication 5, caractérisé an ce que, à la suite de la régénération proprement dite avec du gaz de régénération contenant de l'hydrogène, on recycle pendant quelques heures du gaz produit chaud pour éliminer l'eau de réaction des canalisations.

7. Procédé selon la revendication 6, caractérisé en ce que l'on fait passer ensuite une quantité réglable de gaz de lavage (constitué également par du gaz produit) à travers les adsorbeurs (61, 62).

8. Dispositif pour la mise en oeuvre d'un procédé selon l'une quelconque des revendications précédentes, caractérisé en ce qu'il comprend, pour la fabrication d'azote très pur, une installation à alternance de pression (1 à 19) qui est en elle-même connue et à laquelle se raccorde un dispositif pour éliminer l'oxygène résidual par oxydation de cuivre, qui comprend deux adsorbeurs à lit de cuivre (61, 62) utilisés alternativement.

9. Dispositif selon la revendication 8, caractérisé en ce qu'il comprend deux adsorbeurs à zéolite (34, 35) utilisés alternativement pour le post-séchage du qaz inerte.

10. Dispositif selon la revendicatigon 8 ou 9,

**0 075 663**

caractérisé en ce que les soupapes ou organes semblables servant à la commande de l'écoulement du gaz inerte et des gaz de régénération sont constitués, de préférence en totalité, par des soupapes à clapet.

11. Dispositif selon l'une des revendications 8 à 10, caractérisé en ce qu'une partie au moins des ventilateurs ou organes analogues servant au refoulement du gaz produit sont constitués par des soufflantes de Roots.

12. Dispositif selon l'une des revendications 8 à 11, caractérisé en ce que la pompe à vide (17) de l'installation à alternance de pression (1 à 19) est une soufflante de Roots.

# FIG.1

FIG.2

0075 663